# EUROPEAN PATENT APPLICATION

(11) **EP 4 503 753 A1**
(43) Date of publication of application: **05.02.2025**
(21) Application number: 23796629.6
(22) Date of filing: 28.03.2023
(51) Int. Cl.: H04W 48/16, H04W 4/40, H04W 8/18, H04W 8/26, H04W 48/10, H04W 76/10, H04W 80/04, H04W 84/04, H04W 88/18

(54) **COMMUNICATION DEVICE EMBEDDED IN VEHICLE, AND OPERATING METHOD THEREFOR**

(30) Priority: 27.04.2022 KR 20220052233
(71) Applicant: Samsung Electronics Co., Ltd., Suwon-si, Gyeonggi-do 16677 (KR)
(72) Inventor: LEE, Kijeong, Suwon-si, Gyeonggi-do 16677 (KR); JUN, Jaebum, Suwon-si, Gyeonggi-do 16677 (KR); JU, Seungbum, Suwon-si, Gyeonggi-do 16677 (KR)
(74) Representative: Gulde & Partner
(86) International application number: PCT/KR2023/004066
(87) International publication number: WO 2023/210980

(57) **Abstract**

A communication device and an operating method thereof are provided to prevent data session lost or a torn-down phenomenon, in a case that data communication is performed via a network operator supporting 5^{th}-generation Stand Alone (5G SA) or 5G E-UTRAN New Radio - Dual Connectivity (5G ENDC) network service. According to an embodiment of the present disclosure, the communication device may identify a requirement of a network operator providing a connection-target network service, may obtain network service information of a communication network, may determine an Internet Protocol (IP) protocol type to connect to the communication network, based on at least one of the requirement of the network operator, the network service information, and Radio Access Technology (RAT) information of the communication device, and may transmit a request signal for requesting a PDN access to the communication network, based on the determined IP protocol type.

## Description

### Technical Field

The present disclosure relates to a communication device mounted in a vehicle, and an operating method thereof. More particularly, the present disclosure relates to an operating method for allowing a communication device supporting a 5^{th}-generation Stand Alone (5G SA, 5G SA mobile communication) to perform data communication without data session lost, according to types of a network service provided by a network operator, and the communication device therefor.

### Background Art

Recently, vehicle-to-everything (V2X) communication has been used to allow vehicles to transmit and receive data through wired and wireless communication networks. V2X communication requires low latency and high data rates to perform data transmission and reception for autonomous driving of a vehicle, high-definition (HD) map data updates, over-the-air (OTA) vehicle operating system updates, or the like. In particular, for autonomous driving of a vehicle, high data rates and low latency are required because the vehicle needs to exchange data in real time with a camera, a light detection and ranging (LiDAR) sensor, a radio detection and ranging (RADAR) sensor, or a server so as to improve a recognition rate of the surrounding environment, such as with respect to a road on which the vehicle is traveling or nearby vehicles. For real-time data communication, high data rates, and low latency, a 5^{th}-generation (5G) communication scheme is widely used.

According to areas and network operators, a 5^{th}-generation Stand Alone (5G SA, 5G SA mobile communication) scheme may be used, or a 5G communication network is provided via a 5G E-UTRAN New Radio - Dual Connectivity (5G ENDC) scheme. Some network operators do not provide a public data network (PDN) access via an Internet Protocol (IP) protocol of IPv4v6 dual stack in a 5G SA node. In this case, in a case that a communication device mounted in a vehicle requests an access via IPv4v6 dual stack in a 4^{th}-generation (4G) Long Term Evolution (LTE) network, the network allocates an IP protocol for the communication device as IPv4v6. In an initial connection stage, in a case that a driver moves to an area where a 5G SA network is serviced from a network environment condition of a network operator that does not involve a 5G core network node, data session lost may occur or a torn-down phenomenon may occur.

### Disclosure

### Technical Solution

An aspect of the present disclosure provides an operating method of a communication device mounted in a vehicle. According to an embodiment of the present disclosure, an operating method of a communication device may include identifying a requirement of a network operator providing a connection-target network service. According to an embodiment of the present disclosure, the operating method may include obtaining network service information of a communication network by decoding a system information block (SIB) obtained from a neighboring base station, the network service information being provided from the network operator. According to an embodiment of the present disclosure, the operating method may include determining an Internet Protocol (IP) protocol type to connect to the communication network, based on at least one of the requirement of the network operator, the network service information, and Radio Access Technology (RAT) information of the communication device. According to an embodiment of the present disclosure, the operating method may include transmitting a request signal for requesting a public data network (PDN) access to the communication network, based on the determined IP protocol type.

Another aspect of the present disclosure provides a communication device mounted in a vehicle. According to an embodiment of the present disclosure, the communication device may include a communication interface, a modem database storing a public land mobile network (PLMN) of at least one network operator and information about a requirement of the at least one network operator, a memory storing a program including one or more instructions, and at least one processor configured to execute the one or more instructions of the program stored in the memory. The at least one processor may be configured to identify the requirement of a network operator, based on International Mobile Subscriber Identity (IMSI) information of a subscriber identification module (SIM) card and the PLMN stored in the modem database. The at least one processor may be configured to obtain service information of a connectable communication network provided by the network operator, by decoding a system information block (SIB) obtained from a neighboring base station via the communication interface. The at least one processor may be configured to determine an IP protocol type to connect to the communication network, based on at least one of the identified requirement of the network operator, the obtained service information of the communication network, and RAT information of the communication device. The at least one processor may be configured to control the communication interface to transmit a request signal for requesting a PDN access to the communication network, based on the determined IP protocol type.

Another aspect of the present disclosure provides a computer program product including a computer-readable recording medium having recorded thereon a program to be executed on a computer. The computer-readable recording medium may include instructions readable by a communication device mounted in a vehicle to perform operations of identifying a requirement of a network operator providing a connection-target network service, obtaining network service information of a communication network by decoding a SIB obtained from a neighboring base station, the network service information being provided from the network operator, determining an IP protocol type to connect to the communication network, based on at least one of the requirement of the network operator, the network service information, and RAT information of the communication device, and transmitting a request signal for requesting a PDN access to the communication network, based on the determined IP protocol type.

### Description of Drawings

The present disclosure may be readily understood with a combination of the following detailed descriptions and the accompanying drawings, wherein reference numbers refer to structural elements.
FIG. 1 is a conceptual diagram illustrating an operation in which a communication device according to an embodiment of the present disclosure requests a communication network for a public data network (PDN) access.
FIG. 2 is a block diagram illustrating elements of a communication device, according to an embodiment of the present disclosure.
FIG. 3 is a flowchart illustrating an operating method of a communication device, according to an embodiment of the present disclosure.
FIG. 4 is a flowchart illustrating a method by which a communication device obtains requirement information of a network operator, according to an embodiment of the present disclosure.
FIG. 5 is a diagram illustrating an operation of obtaining information about a requirement of a network operator by using information stored in a modem database of a communication device, according to an embodiment of the present disclosure.
FIG. 6 is a flowchart illustrating a method by which a communication device determines an Internet Protocol (IP) protocol type, according to an embodiment of the present disclosure.
FIG. 7 is a flowchart illustrating a method by which a communication device determines an IP protocol type, according to an embodiment of the present disclosure.
FIG. 8 shows a table of a plurality of pieces of network service information, a network operator requirement, and an IP protocol type for each network operator, according to an embodiment of the present disclosure.
FIG. 9 is a diagram illustrating an operation in which a communication device requests a cloud server for an update, and determines an IP protocol type by receiving updated information from the cloud server, according to an embodiment of the present disclosure.
FIG. 10 is a diagram illustrating an operation in which a communication device requests a network for a public data network (PDN) access, the network being provided in a changed area according to movement of a vehicle, according to an embodiment of the present disclosure.
FIG. 11 is a diagram for describing an operation performed by a communication device according to the present disclosure by using an artificial intelligence technology.
FIG. 12 is a diagram illustrating a disclosed embodiment in which a communication device according to the present disclosure interoperates with a server.
FIG. 13 is a diagram for describing in detail FIG. 12.

### Mode for Invention

Although the terms used herein for describing embodiments of the present disclosure are selected from among common terms that are currently widely used in consideration of their function in the present disclosure, the terms may be different according to an intention of one of ordinary skill in the art, a precedent, or the advent of new technology. Also, in particular cases, the terms are discretionally selected by the applicant of the present disclosure, in which case, the meaning of those terms will be described in detail in the corresponding embodiment. Therefore, the terms used in the present specification are not merely designations of the terms, but the terms are defined based on the meaning of the terms and content throughout the present disclosure.

The singular expression may also include the plural meaning as long as it is not inconsistent with the context. All the terms used in the present specification, including technical and scientific terms, may have the same meanings as those generally understood by one of skill in the art.

Throughout the present disclosure, when a part "includes" or "comprises" an element, it means that the part may additionally include or comprise other elements rather than excluding other elements as long as there is no particular opposing recitation. In addition, as used in the present specification, terms such as "...er (or)", "... unit", "... module", etc., indicate a unit that performs at least one function or operation, which may be implemented as hardware or software or a combination thereof.

As used in the present disclosure, the expression "configured to" may be interchangeably used with, for example, "suitable for", "having the capacity to", "designed to", "adapted to", "made to", or "capable of", according to a situation. The expression "configured to" may not imply only "specially designed to" in a hardware manner. Instead, in a certain circumstance, the expression "a system configured to" may indicate the system "capable of" together with another device or components. For example, "a processor configured (or set) to perform A, B, and C" may imply a dedicated processor (e.g., an embedded processor) for performing a corresponding operation or a generic-purpose processor (e.g., central processing unit (CPU) or an application processor) capable of performing corresponding operations by executing one or more software programs stored in a memory.

Also, in the present disclosure, it should be understood that when elements are "connected" or "coupled" to each other, the elements may be directly connected or coupled to each other, but may alternatively be connected or coupled to each other with an element therebetween, unless specified otherwise.

In the present disclosure, a 'vehicle' refers to a transportation means that travels on a road or track. The vehicle may be a concept that includes an internal combustion engine vehicle having an engine as a power source, a hybrid vehicle having an engine and an electric motor as a power source, an electric vehicle having an electric motor as a power source, etc. In an embodiment of the present disclosure, the vehicle may include at least one of an automobile, a train, and a motorcycle.

In the present disclosure, a 'communication device' refers to a device connected via a base station to a network provided by a network operator and configured to perform data communication. The communication device of the present disclosure may be mounted in the vehicle. The communication device may be configured as a telematic control Unit (TCU) mounted in the vehicle, but the present disclosure is not limited thereto. According to an embodiment of the present disclosure, the communication device may include a communication interface configured of an antenna module and a modem.

In the present disclosure, a 'network operator' refers to a wireless communication service provider that provides a wireless communication service to a user, and may be referred to as a wireless service provider, wireless carrier, a cellular company, or mobile network carrier. A network provider according to an embodiment of the present disclosure may provide a network service of at least one type among a 4^{th}-generation (4G) Long Term Evolution (LTE) scheme, 5^{th}-generation E-UTRAN New Radio - Dual Connectivity (5G ENDC), or a 5G Stand Alone (5G SA) scheme.

In the present disclosure, '5G SA (5G Stand Alone mobile communication)' indicates a communication scheme that is not associated with a 4G LTE network and independently performs 5G mobile communication.

In the present disclosure, '5G Non-Stand Alone (5G NSA mobile communication)' indicates a scheme of 4G LTE infra (LTE core: EPC, LTE base station: eNB) to which only a 5G base station (gNB) is introduced and which has dual connectivity architecture capable of connecting both 4G LTE and 5G network, in which the eNB is a master and the gNB is secondary. The 5G NSA may include, for example, 5G E-UTRAN New Radio - Dual Connectivity (5G ENDC).

In the present disclosure, an 'Internet Protocol (IP) protocol' refers to a transmission protocol used in transmission of data from any one node to another node in a network environment. The IP protocol may support a function of host address marking and packet segmentation.

In the present disclosure, an 'IP protocol type' refers to a type of an address system of an IP protocol. The IP protocol type may include IPv4 consisting of up to 12-digit numbers divided into 4 **groups,** IPv6 having a 128-bit address system, and IPv4v6 dual stack having both IPv4 and IPv6 address systems and simultaneously processing IPv4 and IPv6.

Hereinafter, an embodiment of the present disclosure will be described in detail with reference to the accompanying drawings to allow one of skill in the art to easily implement the embodiment. The present disclosure may, however, be embodied in many different forms and should not be construed as being limited to an embodiment set forth herein.

Hereinafter, embodiments of the present disclosure will be described in detail with reference to the drawings.

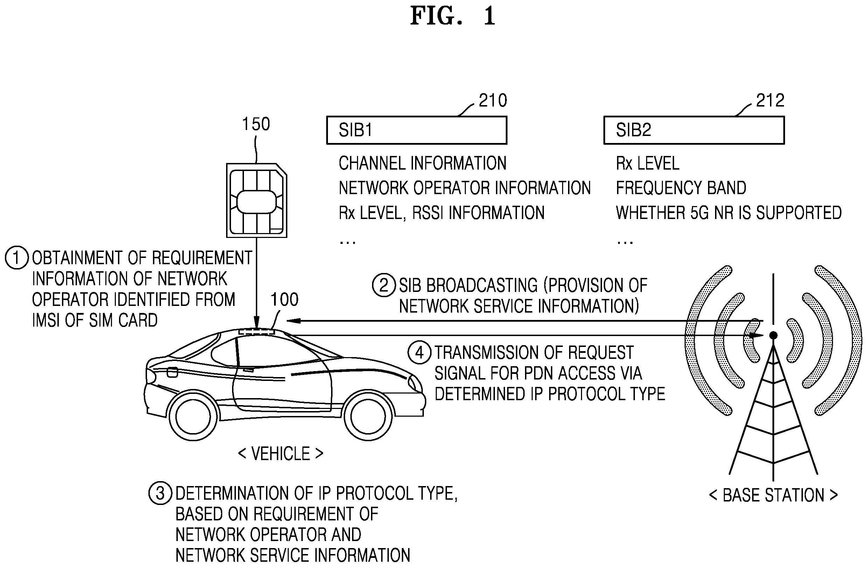

FIG. 1 is a conceptual diagram illustrating an operation in which a communication device 100 according to an embodiment of the present disclosure requests a communication network for a public data network (PDN) access.

Referring to FIG. 1, the communication device 100 may be mounted on an external structure of a vehicle 10 or may be disposed in the external structure. In an embodiment of FIG. 1, the communication device 100 may be disposed in each of metal structures constituting a roof of the vehicle 10. The communication device 100 may include an antenna module and a modem, and may communicate with data communication with a base station 200.

The communication device 100 may identify a network operator providing a network service connectable via the base station 200, and may identify a requirement of the network operator (operation ①). According to an embodiment of the present disclosure, the communication device 100 may identify a public land mobile network (PLMN) from international mobile subscriber identity (IMSI) of a subscriber identification module (SIM) card 150, and may obtain information about the requirement of the network operator according to the identified PLMN. In the present disclosure, the 'requirement of the network operator' may be a policy about an IP protocol type preset according to network service information provided by the network operator. According to an embodiment of the present disclosure, the requirement of the network operator may be the policy of the network operator preset to determine an IP protocol type as IPv6, in a case that the network service supports at least one communication scheme of 5G NSA or 5G SA. The requirement may exist or may not exist, according to a network operator.

The base station 200 may broadcast a system information block (SIB) to the communication device 100, and thereby, may provide network service information (operation ②). The SIB information broadcast by the base station 200 may include SIB1 and SIB2. The SIB1 may include, for example, channel information, network operator information (e.g., user identification information or PLMN), or a signal reception level, received Signal Strength Indicator (RSSI) information, and the SIB2 may include, for example, information about at least one of a signal reception level, a frequency band, or whether a 5G New Radio (5G NR) scheme is supported. The communication device 100 may monitor SIB information broadcast by the base station 200, and may obtain network service information by decoding the SIB information. According to an embodiment of the present disclosure, the communication device 100 may decode the SIB information broadcast by the base station 200, thereby obtaining network service type information as to whether a network service provided by the base station 200 is a 4G LTE scheme, a 5G NSA scheme, or a 5G SA scheme.

The communication device 100 may determine an IP protocol type, based on the requirement of the network operator and the network service information (operation ③). According to an embodiment of the present disclosure, in a case that the requirement of the network operator is identified, the communication device 100 may determine an IP protocol type according to the requirement of the network operator. For example, in a case that the requirement of the network operator is identified, in which an IP protocol type in accessing the 5G NSA or 5G SA scheme is preset as IPv6, the communication device 100 may determine the IP protocol type as IPv6, according to the requirement of the network operator. According to another embodiment of the present disclosure, in a case that the requirement of the network operator is not identified, the communication device 100 may determine an IP protocol type, based on a type of a network service, e.g., based on which communication scheme of the 5G ENDC scheme or the 5G SA scheme is used in providing a service. For example, in a case that the network service is provided based on the 5G ENDC scheme, the communication device 100 may determine the IP protocol type as IPv4v6 dual stack. As another example, in a case that the network service is provided based on only the 5G SA scheme, the communication device 100 may determine the IP protocol type as IPv6.

The communication device 100 may transmit a request signal for a PDN access to the base station 200, via the determined IP protocol type (operation ④).

Recently, vehicle-to-everything (V2X) communication for connecting to a network via the communication device 100 mounted in the vehicle 10 is widely used. The 5G network service may be provided via the 5G SA scheme or the 5G ENDC scheme, according to an area or a network operator. Some network operators may not support a PDN access via an IP protocol of IPv4v6 dual stack in a 5G SA node. In this case, when the communication device 100 requests an access via IPv4v6 dual stack in the 4G LTE, the network allocates an IP protocol with respect to the communication device 100, to be IPv4v. In an initial connection stage, when a driver moves to an area where a 5G SA network is serviced from a network environment condition of a network operator that does not involve a 5G core network node, data session lost may occur or a torn-down phenomenon may occur. When the data session lost phenomenon or the torn-down phenomenon occurs, a problem may occur because a performance key performance indicator (KPI) of a communication device deteriorates, and user convenience deteriorates due to data communication lost.

The present disclosure provides the communication device 100 and an operating method thereof for requesting a PDN access via an IP protocol type capable of preventing data session lost or a torn-down phenomenon, in a case that data communication is performed via a network operator supporting a 5G SA or 5G ENDC network service.

In a case that the communication device 100 according to an embodiment shown in FIG. 1 attempts to connect to a network provided via the base station 200 by a network operator, the communication device 100 may determine an IP protocol type, based on a requirement of the network operator and network service information, and may transmit a request signal for a PDN access via the determined IP protocol type to the base station 200, such that data session lost and torn-down phenomenon may be prevented in advance. The communication device 100 according to an embodiment of the present disclosure may be stably provided a network service even when the vehicle 10 moves various countries or areas surrounding a complicated network service environment, and thus, data communication stability and user convenience may be improved.

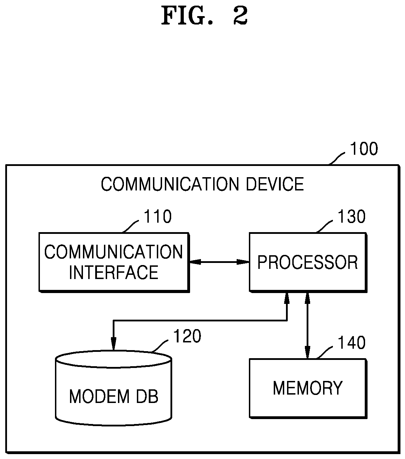

FIG. 2 is a block diagram illustrating elements of the communication device 100, according to an embodiment of the present disclosure.

The communication device 100 shown in FIG. 2 is a device that is connected to a network provided via the base station 200 (see FIG. 1) by a network operator, and is configured to perform data communication. The communication device 100 of the present disclosure may be mounted on a vehicle. According to an embodiment of the present disclosure, the communication device 100 may be mounted on an external structure of the vehicle. For example, the communication device 100 may be disposed in metal structures constituting a roof of the vehicle. However, the present disclosure is not limited thereto, and the communication device 100 may be disposed in a bonnet, a bumper, a pillar, or a trunk of the vehicle.

The communication device 100 may be configured as a TCU mounted in the vehicle, but the present disclosure is not limited thereto. Referring to FIG. 2, the communication device 100 may include a communication interface 110, a modem database 120, a processor 130, and a memory 140. The communication interface 110, the modem database 120, the processor 130, and the memory 140 may be electrically and/or physically connected to each other.

The elements shown in FIG. 2 are merely an embodiment of the present disclosure, and thus, elements included in the communication device 100 are not limited to those of FIG. 2. The communication device 100 may further include elements that are not shown in FIG. 2. For example, in a case that the communication device 100 is integrated with the TCU of the vehicle, the communication device 100 may further include a global positioning system (GPS) sensor configured to obtain latitude and longitude values according to moving and stopping of the vehicle. However, the present disclosure is not limited thereto, and in another embodiment of the present disclosure, the communication device 100 may not include at least one of the elements shown in FIG. 2.

The communication interface 110 is configured to transmit a request signal for requesting a base station for a PDN access, and to perform data communication by accessing a network provided via the base station from the network operator. According to an embodiment of the present disclosure, the communication interface 110 may include an antenna module and a modem for wireless data communication with the base station. The modem of the communication interface 110 may include at least one hardware communication module among a short-range communication module, a mobile communication module, and a broadcasting reception module. The short-range communication module may be formed as a hardware device configured to perform data communication by using at least one of wireless data communication schemes including Wi-Fi, Bluetooth, ZigBee, Wi-Fi direct (WFD), infrared data association (IrDA), Bluetooth low energy (BLE), near field communication (NFC), wireless broadband Internet (WiBro), World interoperability for microwave access (WiMAX), shared wireless access protocol (SWAP), or wireless gigabit alliance (WiGig). The mobile communication module may be formed as a hardware device configured to perform data transmission and reception via a network conforming to at least one of communication rules including code division multiple access (CDMA), wideband code division multiple access (WCDMA), 3G mobile communication, 4G LTE, 5G ENDC, 5G SA, or 5G mmWave.

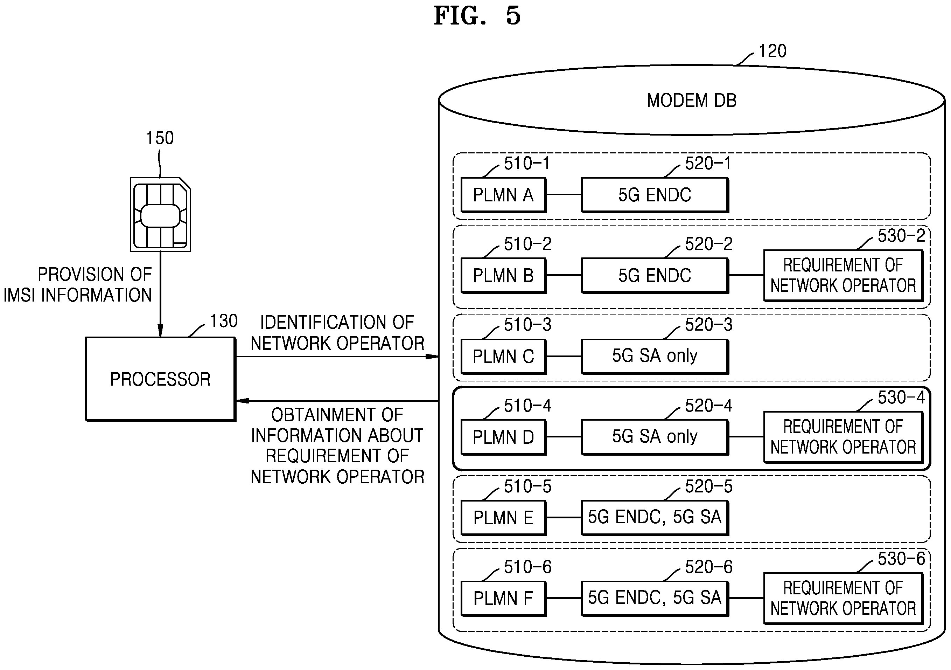

The modem database 120 is a data storage storing a requirement for each of at least one network operator. The modem database 120 may store a PLMN indicating identification information of at least one network operator and a requirement of a network operator corresponding to the PLMN. According to an embodiment of the present disclosure, at least one PLMN may be stored in the modem database 120, as a key-value format in which at least one PLMN is stored as a key and a requirement of a network operator corresponding to a PLMN is stored as a value. The at least one PLMN and the requirement of the network operator stored in the modem database 120 will be described in detail with reference to FIG. 5.

According to an embodiment of the present disclosure, in a case that a requirement of a network operator is changed, the processor 130 may update the requirement by storing information of the updated requirement in the modem database 120.

The modem database 120 may be configured as a non-volatile memory. The 'non-volatile memory' refers to a memory medium storing and retaining information without supply of power and the stored information may be used again when the power is supplied. The non-volatile memory may be configured as at least one of a flash memory, a hard disk, a solid-state drive (SSD), a multimedia card micro type, a card-type external memory (for example, a secure digital (SD) or an extreme digital (XD) memory)), a read-only memory (ROM), a magnetic disk, or an optical disk.

While FIG. 2 illustrates that the modem database 120 is a separate element from the memory 140, the present disclosure is not limited to what is shown in FIG. 2. According to an embodiment of the present disclosure, the modem database 120 may be integrated with the memory 140 as one element. However, the present disclosure is not limited thereto, and in another embodiment of the present disclosure, the modem database 120 may be implemented as an external memory not included in the communication device 100, or may be implemented as a web-based storage medium connected to a wireless network via the communication interface 110.

The processor 130 may execute one or more instructions of a program stored in the memory 140. The processor 130 may include hardware elements for performing arithmetic, logic, and input/output computations and signal processing. The processor 130 may include, for example, at least one of a CPU, a microprocessor, a graphic processor unit (GPU), application specific integrated circuits (ASICs), DSPs, digital signal processing devices (DSPDs), programmable logic devices (PLDs), and field programmable gate arrays (FPGAs), but the present disclosure is not limited thereto. According to an embodiment of the present disclosure, the processor 130 may be configured as a communication processor (CP).

According to an embodiment of the present disclosure, the processor 130 may include an artificial intelligence (AI) processor that performs Al learning. In this case, the Al processor may be trained to determine, by using a learning network model of an Al system, an IP protocol type, based on information about at least one of a requirement of a network operator, network service information, and a Radio Access Technology (RAT) of the communication interface 110. The Al processor may be manufactured in the form of a dedicated hardware chip for Al, or may be manufactured as part of an existing general-purpose processor (e.g., a CPU or an application processor) or a dedicated graphics processor (e.g., a graphics processing unit (GPU)), and may be mounted in the communication device 100.

FIG. 2 illustrates the processor 130 as one element, but the present disclosure is not limited thereto. In an embodiment, the processor 130 may include one or more processors.

The memory 140 may be configured as a storage medium of at least one type of a flash memory type, a hard disk type, a multimedia card micro type, a card type memory (for example, a SD or an XD memory), a random access memory (RAM), a static RAM (SRAM), a read-only memory (ROM), an electrically erasable programmable ROM (EEPROM), a programmable ROM (PROM), or an optical disk.

The memory 140 may store instructions related to a function and/or operations of the communication device 100 to determine an IP protocol type and to transmit a request signal for requesting a PDN access via the determined IP protocol type. According to an embodiment of the present disclosure, the memory 140 may store at least one of instructions, an algorithm, a data structure, program code, and an application program, which is readable by the processor 130. The instructions, the algorithm, the data structure, and the program code stored in the memory 140 may be implemented in, for example, programming or scripting languages such as C, C++, Java, assembler, etc.

In an embodiment below, the processor 130 may be configured to execute instructions or program codes, which are stored in the memory 140.

The processor 130 may identify a network operator providing a network service connectable to a base station via the communication interface 110, and may identify a requirement of the network operator. According to an embodiment of the present disclosure, the processor 130 may identify a PLMN from IMSI information of a SIM card, and may identify a network operator according to the identified PLMN from among at least one network operator providing a connectable network service via the base station. The processor 130 may obtain, from the modem database 120, information about a requirement of the network operator corresponding to the identified PLMN.

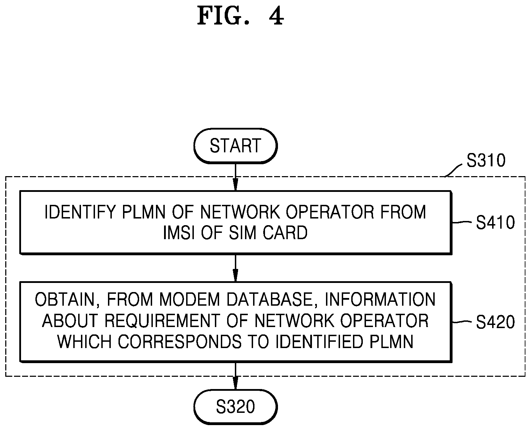

In the present disclosure, a 'requirement of a network operator' may be a policy about an IP protocol type preset according to network service information provided by the network operator. According to an embodiment of the present disclosure, the requirement of the network operator may be the policy of the network operator preset to determine an IP protocol type as IPv6, in a case that the network service supports at least one communication scheme of 5G NSA or 5G SA. The requirement may exist or may not exist, according to a network operator. According to an embodiment of the present disclosure, the processor 130 may provide the identified PLMN to the modem database 120, and may obtain, by using the PLMN as key, information about a requirement of the network operator that is a value. A detailed embodiment in which the processor 130 obtains, from the modem database 120, information about the requirement of the network operator will be described in detail with reference to FIGS. 4 and 5.

The processor 130 may control the image processing device 100 to monitor SIB broadcast by the base station, and may decode the SIB, thereby obtaining network service information of a communication network provided by the network operator. The SIB information broadcast by the base station may include SIB1 and SIB2. The SIB1 may include, for example, channel information, network operator information (e.g., user identification information or PLMN), or a signal reception level, RSSI information, and the SIB2 may include, for example, information about at least one of a signal reception level, a frequency band, or whether a 5G NR scheme is supported. The processor 130 may decode the SIB information, and thus, may obtain service information of a connectable network service,. For example, the processor 130 may obtain network service type information as to whether a network service provided by the base station 200 is a 4G LTE scheme, a 5G NSA scheme, or a 5G SA scheme.

The processor 130 may determine an IP protocol type, based on at least one of the requirement of the identified network operator, the network service information, and RAT information of the communication interface 110. In the present disclosure, the 'IP protocol type' indicates a type of an address system of an IP protocol. The IP protocol type may include, for example, at least one of IPv4, IPv6, and IPv4v6. IPv4 is a protocol consisting of up to 12-digit numbers divided into 4 groups, IPv6 is a protocol having a 128-bit address system, and IPv4v6 dual stack is a protocol having both IPv4 and IPv6 address systems and processing both IPv4 and IPv6. According to an embodiment of the present disclosure, in a case that the requirement of the network operator is identified, the processor 130 may determine an IP protocol type, according to the requirement of the network operator. For example, in a case that the requirement of the network operator is identified, in which an IP protocol type in accessing the 5G NSA or 5G SA scheme is preset as IPv6, the processor 130 may determine the IP protocol type as IPv6, according to the requirement of the network operator.

According to another embodiment of the present disclosure, in a case that the requirement of the network operator is not identified, the processor 130 may determine an IP protocol type, based on a type of a network service, e.g., based on which communication scheme of the 5G ENDC scheme or the 5G SA scheme is used in providing a service, and RAT information of the communication interface 110. The RAT information is information about whether the communication interface 110 is connectable to a network via at least one communication scheme of 3G WCDMA, 4G LTE, 5G NSA, or 5G SA. For example, in a case that the network service is provided based on a 5G ENDC scheme, and the 5G ENDC is supportable according to the RAT information of the communication interface 110, the communication device 100 may determine the IP protocol type as IPv4v6 dual stack. As another example, in a case that the network service is provided based on only the 5G SA scheme, and the 5G SA scheme is supportable according to the RAT information of the communication interface 110, the communication device 100 may determine the IP protocol type as IPv6.

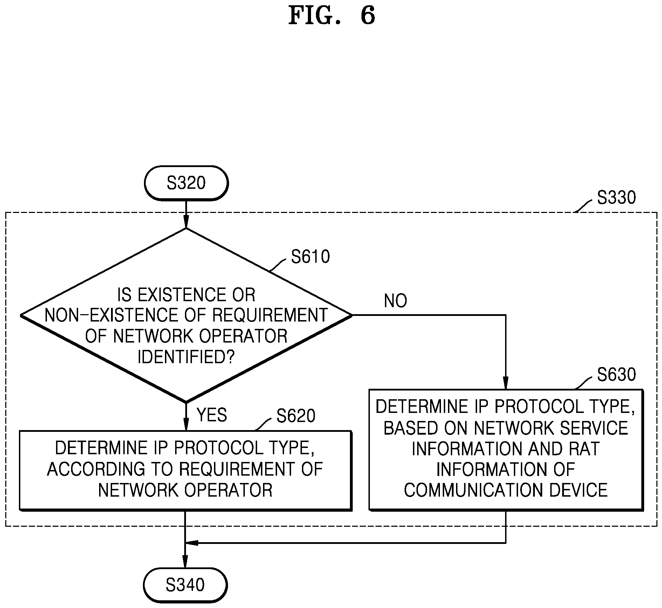

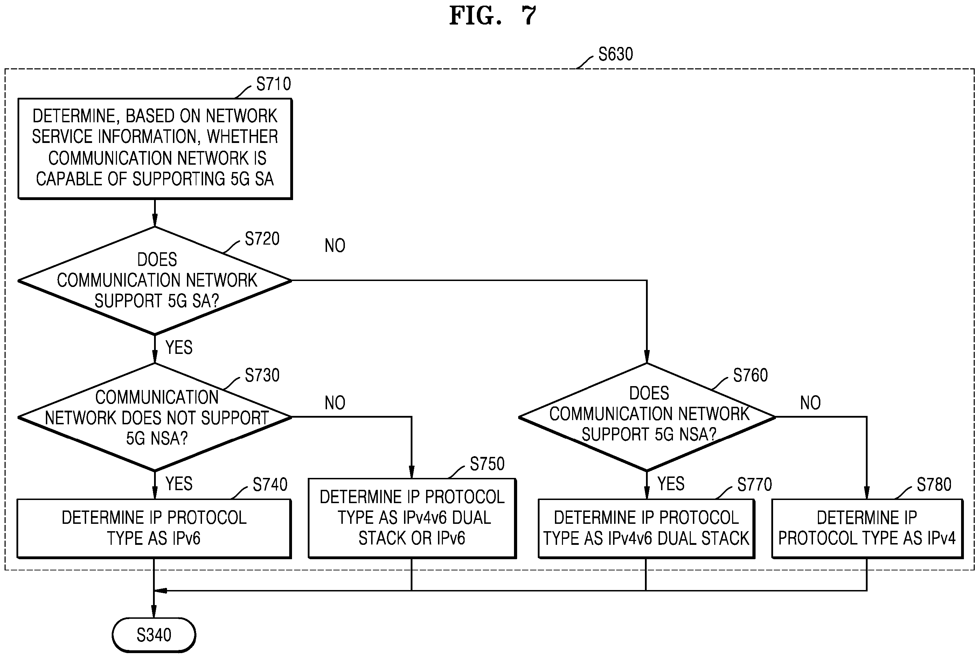

A detailed embodiment in which the processor 130 determines an IP protocol type, based on at least one of a requirement of a network operator, network service information, and RAT information will be described in detail with reference to FIGS. 6 and 7.

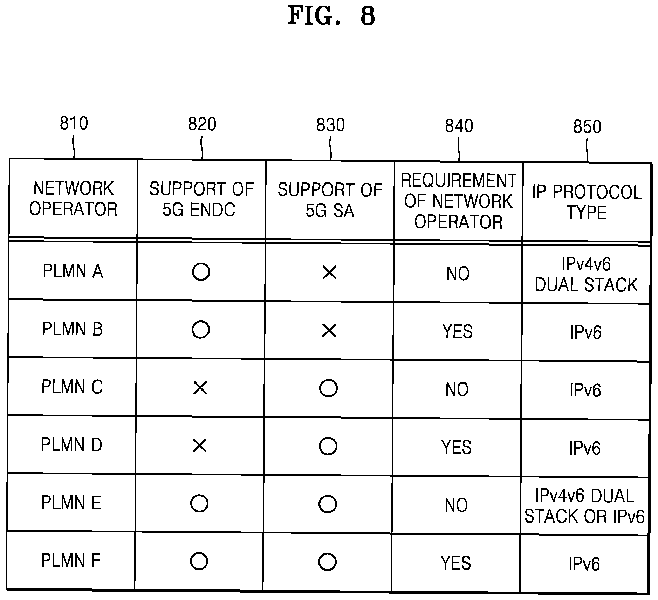

The processor 130 may store, for each network operator, information about at least one of network service type information, a network operator, and a determined IP protocol type, in the modem database 120. In a case that a requirement of a network operator is newly determined or is changed, or a type of a network service provided by the network operator is changed, the processor 130 may update the requirement of the network operator or the type of the network service by storing the changed information in the modem database 120. Network service information, a requirement of a network operator, and information about an IP protocol type which are stored for each network operator in the modem database 120 will be described in detail with reference to FIG. 8.

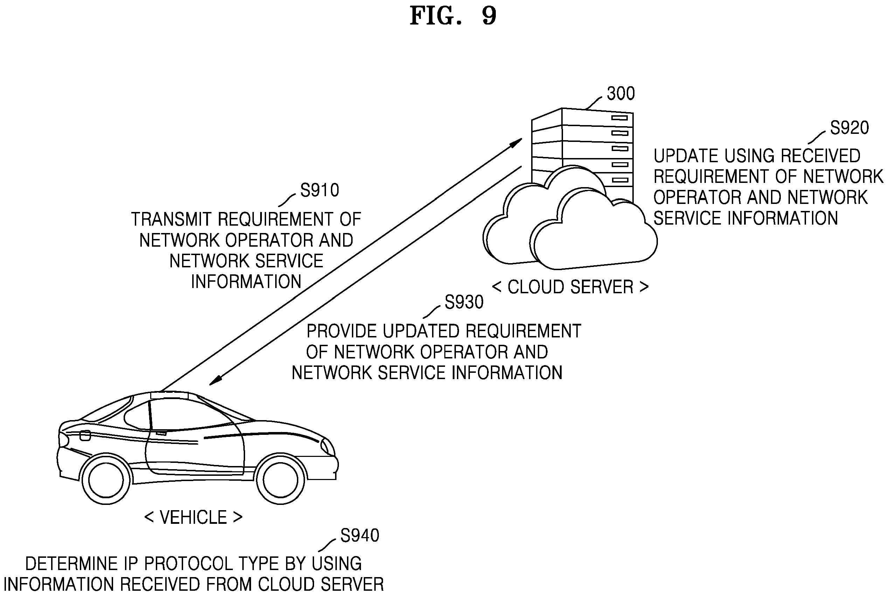

According to an embodiment of the present disclosure, the processor 130 may transmit a requirement and network service information of each network operator to a cloud server of a vehicle manufacturer via the communication interface 110. The processor 130 may request the cloud server to update a requirement and network service information of a network operator by using the transmitted information. In this case, in a case that the processor 130 requests a PDN access via a base station, the processor 130 may previously receive an updated requirement and network service information of the network operator from the cloud server of the vehicle manufacturer, and may determine an IP protocol type, based on the received requirement and network service type. A detailed embodiment in which the processor 130 determines an IP protocol type by receiving updated information from a cloud server of a vehicle manufacturer will be described in detail with reference to FIG. 9.

The processor 130 may transmit a request signal for requesting the base station for a PDN access, according to the determined IP protocol type, via the communication interface 110. For example, in a case that the IP protocol type is determined as IPv6, the processor 130 may control the communication interface 110 to transmit a signal requesting the base station to allocate an IP address as IPv6. As another example, in a case that the IP protocol type is determined as IPv4v6 dual stack, the processor 130 may control the communication interface 110 to transmit a signal requesting the base station to allocate an IP address as IPv4/IPv6.

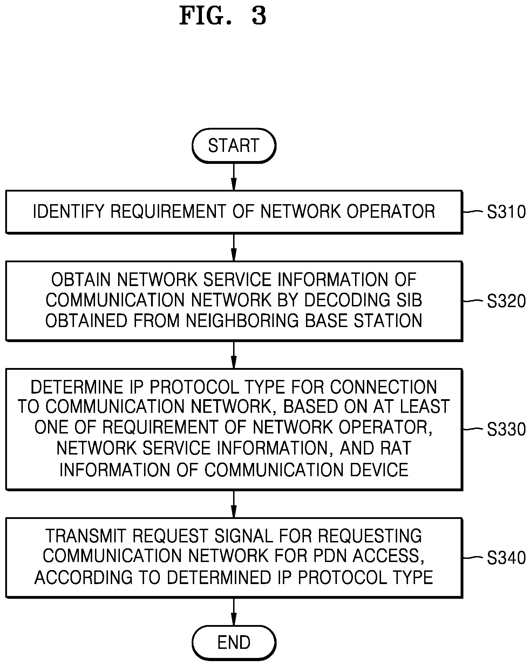

FIG. 3 is a flowchart illustrating an operating method of the communication device 100, according to an embodiment of the present disclosure.

In operation S310, the communication device 100 identifies a requirement of a network operator. A network operator that provides a connectable network service via a base station may be identified. According to an embodiment of the present disclosure, the communication device 100 may identify a PLMN from IMSI information of a SIM card. The communication device 100 may obtain information about the requirement of the network operator, according to the identified PLMN. According to an embodiment of the present disclosure, the communication device 100 may obtain the information about the requirement of the network operator which corresponds to the PLMN identified from the SIM card, by referring to network operator requirement information for at least one PLMN pre-stored in an internal storage or the modem database 120 (see FIG. 2). However, the present disclosure is not limited thereto, and the communication device 100 may obtain information about the requirement of the network operator according to the PLMN, from a cloud server of a vehicle manufacturer.

In operation S320, the communication device 100 may obtain network service information of a communication network by decoding SIB obtained from a neighboring base station. The communication device 100 may monitor SIB broadcast by the neighboring base station, and may decode the SIB. For example, the communication device 100 may obtain, from the SIB, network service type information as to whether a network service provided by the base station 200 is a 4G LTE scheme, a 5G NSA scheme, or a 5G SA scheme.

In operation S330, the communication device 100 may determine an IP protocol type for connection to a communication network, based on at least one of a requirement of a network operator, network service information, and RAT information of the communication device 100. According to an embodiment of the present disclosure, in a case that the requirement of the network operator is identified, the communication device 100 may determine an IP protocol type, according to the requirement of the network operator. For example, in a case that the requirement of the network operator is identified, in which an IP protocol type in accessing the 5G NSA or 5G SA scheme is preset as IPv6, the communication device 100 may determine the IP protocol type as IPv6, according to the requirement of the network operator. According to another embodiment of the present disclosure, in a case that the requirement of the network operator is not identified, the communication device 100 may determine an IP protocol type, based on a type of a network service, e.g., based on which communication scheme of the 5G ENDC scheme or the 5G SA scheme is used in providing a service, and RAT information of the communication device 100. For example, in a case that it is determined that the network service is provided based on a 5G ENDC scheme and the communication device 100 is able to perform data communication via the 5G ENDC scheme, the communication device 100 may determine the IP protocol type as IPv4v6 dual stack. As another example, in a case that the network service is provided based on only the 5G SA scheme, and the communication device 100 is able to perform data communication by using only the 5G SA scheme, the communication device 100 may determine the IP protocol type as IPv6.

In operation S340, the communication device 100 transmits a request signal for requesting a communication network for a PDN access, according to the determined IP protocol type.

FIG. 4 is a flowchart illustrating a method by which the communication device 100 obtains requirement information of a network operator, according to an embodiment of the present disclosure.

Operations S410 and S420 shown in FIG. 4 are detailed operations of operation S310 shown in FIG. 3. Operation S320 of FIG. 3 may be performed after operation S420 of FIG. 4 is performed.

FIG. 5 is a diagram illustrating an operation of obtaining information about a requirement of a network operator by using information stored in the modem database 120 of the communication device 100, according to an embodiment of the present disclosure.

Hereinafter, with reference to FIGS. 4 and 5 together, an embodiment in which the communication device 100 identifies a requirement of a network operator will now be described.

In operation S410 of FIG. 4, the communication device 100 identifies a PLMN from IMSI of a SIM card. The IMSI is identification information for identifying a user in a cellular network, and may be stored in the SIM card 150 (see FIG. 5) as a 64-bit field. Referring to FIG. 5 together, the processor 130 of the communication device 100 may obtain the IMSI information from the SIM card 150, and may identify, from the IMSI information, PLMN that is identification information of a network operator. For example, in a case that IMSI information stored in a SIM card is PLMN D, the processor 130 may identify a network operator corresponding to the PLMN D.

In operation S420 of FIG. 4, the communication device 100 obtains, from the modem database 120 (see FIG. 5), information about a requirement of a network operator which corresponds to the identified PLMN. Referring to FIG. 5 together, the modem database 120 may store network service information and network operator requirement information for each of a plurality of network operators. In the embodiment shown in FIG. 5, the modem database 120 may store a plurality of pieces of network service information 520-1 to 520-6 and a plurality of pieces of network operator requirement information 530-2, 530-4, and 530-6 according to a plurality of PLMNs 510-1 to 510-6. The network operator requirement information 530-2, 530-4, or 530-6 may be a policy about an IP protocol type preset according to network service information provided by a network operator. According to an embodiment of the present disclosure, the network operator requirement information 530-2, 530-4, or 530-6 may be a policy of a network operator preset to determine an IP protocol type as IPv6, in a case that the network service supports at least one communication scheme of 5G NSA or 5G SA. The requirement may exist or may not exist, according to a network operator. In the embodiment shown in FIG. 5, the first PLMN 510-1, the third PLMN 510-3, and the fifth PLMN 510-5 may not have a network operator requirement, and the second PLMN 510-2, the fourth PLMN 510-4, and the sixth PLMN 510-6 may have the network operator requirements 530-2, 530-4, and 530-6.

According to an embodiment of the present disclosure, the plurality of PLMNs 510-1 to 510-6 being as keys, and the plurality of pieces of network service information 520-1 to 520-6 respectively corresponding to according to the plurality of PLMNs 510-1 to 510-6 and the plurality of pieces of network operator requirement information 530-2, 530-4, and 530-6 being as values may be stored in key-value formats in the modem database 120. For example, the first network service information 520-1 corresponding to the first PLMN 510-1 may be a 5G ENDC scheme and a network operator requirement may not exist. Equally, the second network service information 520-2 corresponding to the second PLMN 510-2 may be 5G ENDC, and the second network operator requirement 530-2 may be pre-stored in that, in a case that accessing via 5G ENDC, an IP protocol type is determined as IPv6.

For example, in a case that the network operator identified from the SIM card 150 is the PLMN D, the processor 130 may provide the PLMN D to the modem database 120, and may obtain, from the modem database 120, information about the fourth network operator requirement 530-4 corresponding to the PLMN D 510-4. The fourth network operator requirement 530-4 may be a policy of the network operator which sets an IP protocol type as IPv6 in a case that an access is attempted based on a 5G SA scheme.

In FIG. 5, the modem database 120 may be an element included in the communication device 100, but the present disclosure is not limited thereto. According to an embodiment of the present disclosure, the modem database 120 may be implemented as an external memory not included in the communication device 100, or may be implemented as a web-based storage medium connected to the communication device 100 via a wireless network.

According to another embodiment of the present disclosure, the modem database 120 may be an element included in an external server or a cloud server 300 (see FIG. 9) of a vehicle manufacturer. In this case, the communication device 100 may perform a data communication connection with the modem database 120 via the communication interface 110 (see FIG. 2), and may obtain information about a requirement of a network operator from the modem database 120.

FIG. 6 is a flowchart illustrating a method by which the communication device 100 determines an IP protocol type, according to an embodiment of the present disclosure.

Operations S610 to S630 shown in FIG. 6 are detailed operations of operation S330 shown in FIG. 3. Operation S610 of FIG. 4 may be performed after operation S320 of FIG. 3 is performed. Operation S340 of FIG. 3 may be performed after operation S620 or S630 of FIG. 6 is performed.

In operation S610, the communication device 100 identifies existence or non-existence of a requirement of a network operator. A detailed method by which the communication device 100 identifies existence or non-existence of a requirement of a network operator is equal to the descriptions provided with reference to FIGS. 4 and 5, redundant descriptions are omitted.

In a case that it is identified that there is the requirement of the network operator (operation S620), the communication device 100 determines an IP protocol type, according to the requirement of the network operator. The requirement of the network operator may be a policy of the network operator, in which the IP protocol type is determined as IPv6 in a case that accessing via the 5G NSA (including 5G ENDC) scheme or the 5G SA scheme. In a case that the requirement of the network operator is identified, the communication device 100 may determine the IP protocol type for a PDN access to a network, as IPv6.

In a case that it is identified that there is no requirement of the network operator (operation S630), that is, when the requirement of the network operator is not identified, the communication device 100 determines an IP protocol type, based on network service information and RAT information of the communication device 100. Operation S630 will be described in detail with reference to FIG. 7.

FIG. 7 is a flowchart illustrating a method by which the communication device 100 determines an IP protocol type, according to an embodiment of the present disclosure.

Operations S710 to S780 shown in FIG. 7 are detailed operations of operation S630 shown in FIG. 6. Operation S340 of FIG. 3 may be performed after operation S740, S750, S770, or S780 of FIG. 7 is performed.

In operation S710, the communication device 100 determines, based on the network service information, whether a communication network is capable of supporting 5G SA (5G SA mobile communication). According to an embodiment of the present disclosure, the communication device 100 may obtain the network service information of a connection-target communication network by decoding SIB2 of SIB broadcast by a base station. The communication device 100 may determine, based on the network service information, whether the communication network supports 5G SA.

According to an embodiment of the present disclosure, the communication device 100 may determine whether the 5G SA is supported, based on not only the network service information but also based on the RAT information of the communication interface 110 (see FIG. 2).

In operation S720, in a case that it is determined that the communication network supports the 5G SA scheme (operation S730), the communication device 100 determines whether the communication network does not support the 5G NSA scheme. The communication device 100 may determine whether the connection-target communication network supports only the 5G SA scheme or also supports the 5G NSA scheme such as 5G ENDC.

In a case that the communication network supports only the 5G SA scheme and does not support the 5G NSA (operation S740), the communication device 100 determines the IP protocol type as IPv6. In this case, the communication device 100 has to support the 5G SA scheme, according to the RAT information of the communication interface 110. Otherwise, the communication device 100 cannot be connected to the communication network via the 5G SA scheme.

In a case that the communication network supports both the 5G SA scheme and the 5G NSA scheme (operation S750), the communication device 100 determines the IP protocol type as IPv4v6 dual stack or IPv6. In this case, the communication device 100 does not care even when a particular IP protocol type is not determined, the communication device 100 may determine any one of IPv4v6 dual stack or IPv6. The communication device 100 may determine at least one IP protocol type of IPv4v6 dual stack or IPv6, based on whether the 5G SA scheme is supported or the 5G NSA scheme is supported, according to the RAT information of the communication interface 110.

In a case that it is determined that the communication network does not support the 5G SA scheme (operation S760), the communication device 100 determines whether the communication network supports the 5G NSA scheme.

In a case that the communication network supports the 5G NSA scheme (operation S770), that is, when the communication network does not support the 5G SA scheme but supports only the 5G NSA scheme, the communication device 100 determines the IP protocol type as IPv4v6 dual stack. In this case, the communication device 100 has to support the 5G NSA scheme, according to the RAT information of the communication interface 110, so as to be connected to the communication network.

In a case that the communication network does not support the 5G NSA scheme (operation S780), that is, when the communication network does not support both the 5G SA scheme and the 5G NSA scheme, the communication device 100 determines the IP protocol type as IPv4.

The communication device 100 may store, in the modem database 120 (see FIGS. 2 and 5), information about the IP protocol type determined according to an embodiment shown in FIGS. 6 and 7, or may transmit the information to the cloud server 300 (see FIG. 9) of the vehicle manufacturer.

FIG. 8 shows a table 800 of a plurality of pieces of network service information 820 and 830, a network operator requirement 840, and an IP protocol type 850 for each network operator 810, according to an embodiment of the present disclosure.

Referring to the table 800 of FIG. 8, the network operator 810 may include six network operators of PLMN A to PLMN F. However, this is merely an example, and the number of network operator included in the table 800 may be one or at least two. The network operator 810 may be identified by a PLMN.

The plurality of pieces of network service information 820 and 830 may include information as to whether a communication network provided by the network operator 810 supports the 5G NSA scheme or the 5G SA scheme. According to an embodiment of the present disclosure, the plurality of pieces of network service information 820 and 830 may include the 5G ENDC support information 820 and the 5G SA support information 830. The 5G ENDC support information 820 may include information as to whether the communication network supports the 5G ENDC scheme among the 5G NSA scheme, and the 5G SA support information 830 may include information as to whether the communication network supports the 5G SA scheme.

The network operator requirement 840 may be a policy about an IP protocol type preset according to network service information provided by each network operator 810. According to an embodiment of the present disclosure, the network operator requirement 840 may be a policy of each network operator 810, which is preset to determine an IP protocol type as IPv6 in a case that a network service supports at least one communication scheme of the 5G NSA or the 5G SA.

The IP protocol type 850 indicates an IP protocol type determined based on the plurality of pieces of network service information 820 and 830 and the network operator requirement 840.

In an embodiment shown in FIG. 8, the first network operator PLMN A and the second network operator PLMN B may support only the 5G ENDC scheme and may not support the 5G SA scheme. The third network operator PLMN C and the fourth network operator PLMN D may support only the 5G SA scheme. The fifth network operator PLMN E and the sixth network operator PLMN F may support both the 5G ENDC scheme and the 5G SA scheme. Also, the first network operator PLMN A, the third network operator PLMN C, and the fifth network operator PLMN E may not have a network operator requirement, and the second network operator PLMN B, the fourth network operator PLMN D, and the sixth network operator PLMN F may have a network operator requirement.

Referring to the table 800, for an access to the second network operator PLMN B, the fourth network operator PLMN D, and the sixth network operator PLMN F having the network operator requirement 840, an IP protocol type may be determined as IPv6, according to the network operator requirement 840. As the first network operator PLMN A, does not support the 5G SA scheme but supports only the 5G ENDC scheme from among the network operators without the network operator requirement 840, an IP protocol type may be determined as IPv4v6 dual stack so as to access a communication network provided by the first network operator PLMN A. As the third network operator PLMN C supports only the 5G SA scheme from among the network operators without the network operator requirement 840, an IP protocol type may be determined as IPv6 so as to access a communication network provided by the third network operator PLMN C. As the fifth network operator PLMN E supports both the 5G ENDC scheme and the 5G SA scheme from among the network operators without the network operator requirement 840, an IP protocol type may be determined as one of IPv4v6 dual stack or IPv6 so as to access a communication network provided by the fifth network operator PLMN E.

The information included in the table 800 of FIG. 8 may be stored in the modem database 120 (see FIGS. 2 and 5), or may be stored in the cloud server 300 (see FIG. 9) of the vehicle manufacturer.

FIG. 9 is a diagram illustrating an operation in which the communication device 100 requests the cloud server 300 for an update, and determines an IP protocol type by receiving updated information from the cloud server 300, according to an embodiment of the present disclosure.

The cloud server 300 may be a server operated by the manufacturer of the vehicle 10 in which the communication device 100 is mounted. The communication device 100 may be connected to the cloud server 300 via a wireless network by using the communication interface 110 (see FIG. 2), and may perform data transmission and reception with the cloud server 300.

In operation S910, the communication device 100 transmits a requirement of a network operator and network service information to the cloud server 300. The processor 130 (see FIG. 2) of the communication device 100 may transmit, via the communication interface 110 (see FIG. 2) to the cloud server 300, information about the requirement of the network operator in which an IP protocol type is preset according to the 5G SA scheme or the 5G NSA scheme. Also, the processor 130 may transmit, via the communication interface 110 to the cloud server 300, network service information of a communication network provided by the network operator, for example, information about at least one communication scheme of 4G LTE, 5G ENDC, or 5G SA. In this case, the processor 130 may transmit the requirement of the network operator and the network service information along with identification information of the network operator to the cloud server 300, and may request the cloud server 300 to update the requirement of the network operator and the network service information.

In operation S920, the cloud server 300 may perform an update by using the requirement of the network operator and the network service information received from the communication device 100. In a case that previous information is stored in an internal database of the cloud server 300, the cloud server 300 may update the previous information by using the requirement of the network operator and the network service information received from the communication device 100. In a case that the previous information is not stored in the cloud server 300, the cloud server 300 may store, in the internal database, a requirement of a new network operator and network service information of a communication network provided by the new network operator, which are received from the communication device 100.

In operation S930, the cloud server 300 may provide the updated requirement of the network operator and the updated network service information to the communication device 100.

In operation S940, the communication device 100 determines an IP protocol type by using the updated information received from the cloud server 300. According to an embodiment of the present disclosure, before the processor 130 of the communication device 100 attempts to access a communication network, the processor 130 may receive the updated network operator requirement information and the updated network service information from the cloud server 300 via the communication interface 110, and may determine an IP protocol type, based on the received network operator requirement information and the received network service information.

The communication device 100 according to an embodiment shown in FIG. 9 may determine, before accessing a communication network, an IP protocol type, based on updated network operator requirement information and updated network service information which hare from the cloud server 300 operated by the manufacturer of the vehicle 10. As the communication device 100 according to an embodiment of the present disclosure can use updated information even in a case that there is a change in a network operator requirement or network service information, the communication device 100 may attempt a PDN access based on an appropriate IP protocol type, such that data session lost and a torn-down phenomenon may be prevented in advance.

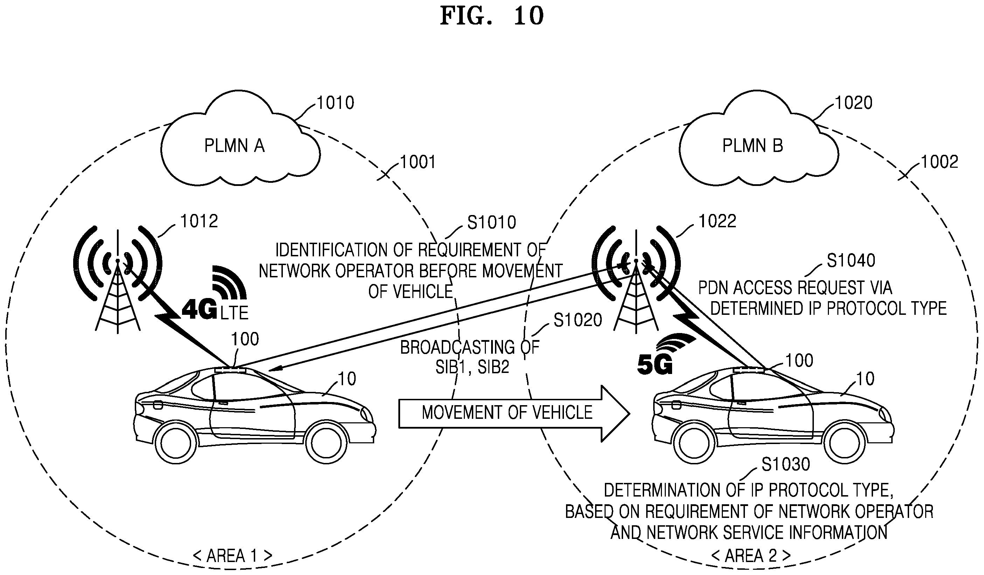

FIG. 10 is a diagram illustrating an operation in which the communication device 100 requests a network for a PDN access, the network being provided in a changed area according to movement of the vehicle 10, according to an embodiment of the present disclosure.

Referring to FIG. 10, a network service may be provided by a first network operator PLMN A in a first area 1001, and a network service may be provided by a second network operator PLMN B in a second area 1002. For example, the first area 1001 and the second area 1002 may be areas of different countries, but the present disclosure is not limited thereto. In the embodiment shown in FIG. 10, the first network operator PLMN A may provide a 4G LTE wireless communication network service via a base station 1012, and the second network operator PLMN B may provide a wireless communication network service of a 5G SA (5G SA mobile communication) scheme via a base station 1022. However, the present disclosure is not limited thereto, and the first network operator PLMN A may provide a communication network service via a 5G ENDC scheme. According to an embodiment of the present disclosure, the second network operator PLMN B may provide only the 5G SA scheme, and may not allocate an IP address according to IPv4v6 dual stack.

The communication device 100 may be mounted in the vehicle 10, and when the vehicle 10 travels within the first area 1001, the communication device 100 may perform data communication by using the 4G LTE wireless communication network service provided by the first network operator 1012 via the base station 1012. In the first area 1001, the communication device 100 may be allocated an IP address via IPv4v6 dual stack, and may be connected to the base station 1012.

When the vehicle 10 moves to the second area 1002, the communication device 100 identifies a requirement of the second network operator PLMN B in advance before the communication device 100 reaches the second area 1002. According to an embodiment of the present disclosure, the processor 130 (see FIG. 2) of the communication device 100 may obtain information about a requirement of the second network operator PLMN B from the modem database 120 (see FIG. 2) or the cloud server 300 (see FIG. 9) of a vehicle manufacturer. For example, the second network operator PLMN B may have the requirement by which an IP protocol type is determined as IPv6, in response to an access request via the 5G SA scheme. However, the present disclosure is not limited thereto, and the second network operator PLMN B may not have a requirement.

In operation S1020, the base station 1022 located in the second area 1002 may broadcast SIB1 and SIB2, and the communication device 100 may monitor the SIB1 and the SIB2. The processor 130 of the communication device 100 may obtain network service information of a communication network provided by the second network operator 1020, by decoding the SIB1 and the SIB2 broadcast by the base station 1022. In the embodiment of FIG. 10, the processor 130 may obtain, from the SIB1 and the SIB2, information indicating that a communication network provided by the second network operator 1020 is the 5G SA scheme.

In operation S1030, the vehicle 10 moves to the second area 1002, and the communication device 100 determines an IP protocol type, based on a requirement of a network operator and network service information. According to an embodiment of the present disclosure, the processor 130 may determine the IP protocol type as IPv6, based on a requirement of the second network operator 1020 and network service information.

In operation S1040, the communication device 100 requests a PDN access via the determined IP protocol type. According to an embodiment of the present disclosure, the processor 130 may control the communication interface 110 (see FIG. 2) to transmit a request signal for requesting the base station 1022 for the PDN access via IPv6.

When the vehicle 10 travels within the first area 1001 in which the 4G LTE wireless communication network service is provided, the communication device 100 requests IPv4v6 dual stack connection capable of supporting 5G SA, and in this case, IPv4 and IPv6 addresses may be allocated. As the first network operator 1010 does not provide a network service of the 5G SA scheme, a 5G node is not involved, and only a network service via a 4G LTE packet gateway is supported. When the vehicle 10 moves from the first area 1001 to the second area 1002, as 5G core network nodes of the first network operator 1010 were not involved in initial session setup, the communication device 100 does not provide session continuity with respect to the 5G SA scheme. Therefore, data session lost or a torn-down phenomenon may occur in a network service provided by the first network operator 1010.

The communication device 100 according to the embodiment shown in FIG. 10 may previously obtain, before the vehicle 10 moves to the second area 1002, information about a requirement of the second network operator 1020 and a network service type (e.g., 5G SA) provided by the second network operator 1020, and may determine (e.g., determined as IPv6) an IP protocol type by using the obtained information, thereby preventing in advance a data session lost phenomenon or a torn-down phenomenon and maintaining data session continuity. Therefore, the communication device 100 according to an embodiment of the present disclosure may provide a technical effect of ensuring data communication continuity and improving user convenience.

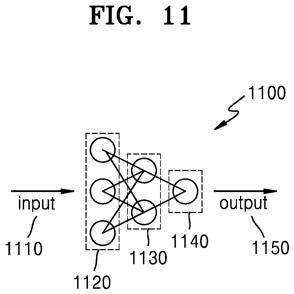

FIG. 11 is a diagram for describing an operation in which the communication device 100 performs by using an Al technology, according to an embodiment of the present disclosure.

In detail, the communication device 100 may perform, by using an Al technology performing a computation using a neural network, at least one of i) operation of identifying a requirement of a network operator providing a connection-target network service, ii) operation of obtaining network service information of a communication network by decoding SIB obtained from a neighboring base station, the network service information provided from the network operator, iii) operation of determining an IP protocol type to connect to the communication network, based on at least one of the requirement of the network operator, the network service information, and RAT information of a communication device, and iv) operation of transmitting a request signal for requesting a PDN access to the communication network, based on the determined IP protocol type.

An artificial intelligence technology (hereinafter, also referred to as the 'Al technology') refers to a technology for obtaining an intended result by performing processing such as analysis and/or classification with respect to input data, based on computations via a neural network.

The Al technology may be implemented by using algorithms. Here, an algorithm or a set of algorithms for implementing the Al technology are referred to as a neural network. Here, the neural network may receive an input of input data, may perform computations for analysis and/or classification, and then may output resulting data. In order for the neural network to accurately output the resulting data corresponding to the input data, it is necessary to train the neural network. Here, 'training' may refer to training a neural network such that the neural network may discover or learn on its own a method of analyzing various pieces of data input to the neural network, a method of classifying the input pieces of data, and/or a method of extracting, from the input pieces of data, features necessary for generating resulting data. In detail, through a training process, the neural network may be trained based on training data (e.g., a plurality of different images) so as to optimize and set weight values in the neural network. Then, the neural network having the optimized weight values may output an intended result by learning input data by itself.

Neural networks that include a plurality of hidden layers for performing computations, that is, the depth of which for performing computations is high, may be classified as deep neural networks. Examples of the neural network may include a convolutional neural network, a recurrent neural network, a restricted Boltzmann machine, a deep belief network, a bidirectional recurrent deep neural network, and a Deep Q-Networks, but the present disclosure is not limited thereto. In addition, the neural networks may be subdivided. For example, CNNs may be subdivided into deep CNN (DCNN), capsule neural networks (CapsNets) (not shown), and the like.

An 'Al model' may refer to a neural network including at least one layer operating to receive input data and output an intended result. Also, the 'Al model' may refer to an algorithm for outputting an intended result by performing computations via a neural network, a set of a plurality of algorithms, a processor for executing the algorithm (or the set of algorithms), software for executing the algorithm (or the set of algorithms), or hardware for executing the algorithm (or the set of algorithms).

At least one of i) operation of identifying a requirement of a network operator providing a connection-target network service, ii) operation of obtaining network service information of a communication network by decoding SIB obtained from a neighboring base station, the network service information provided from the network operator, iii) operation of determining an IP protocol type to connect to the communication network, based on at least one of the requirement of the network operator, the network service information, and RAT information of a communication device, and iv) operation of transmitting a request signal for requesting a PDN access to the communication network, based on the determined IP protocol type, which are described above, may be performed based on the Al model.

Referring to FIG. 11, the neural network 1100 may be trained by receiving an input of training data. Then, the trained neural network 1100 may receive input data 1110 via an input end 1120, and the input end 1120, a hidden layer 1130, and an output end 1140 may perform computations for analyzing the input data 1110 and data transferred from a previous layer and may output output data 1150. While FIG. 11 illustrates the hidden layer 1130 as one layer, this is merely an example, and the hidden layer 1130 may consist of a plurality of layers.

In a disclosed embodiment, the neural network 1100 may be trained to determine, in a case that a requirement of a network operator is identified, an IP protocol type, based on the identified requirement.

In a disclosed embodiment, the neural network 1100 may be trained to determine whether a communication network is able to support 5G SA, based on network service information, and to determine an IP protocol type as IPv6 in a case that it is determined that the communication network supports the 5G SA.

In a disclosed embodiment, the neural network 1100 may be trained to determine whether a communication network supports 5G SA or 5G NSA, based on network service information, and to determine an IP protocol type as IPv4v6 dual stack in a case that it is determined that the communication network supports only the 5G NSA.

In a disclosed embodiment, data or program code related to the neural network 1100 that performs at least one of i) operation of identifying a requirement of a network operator providing a connection-target network service, ii) operation of obtaining network service information of a communication network by decoding SIB obtained from a neighboring base station, the network service information provided from the network operator, iii) operation of determining an IP protocol type to connect to the communication network, based on at least one of the requirement of the network operator, the network service information, and RAT information of a communication device, and iv) operation of transmitting a request signal for requesting a PDN access to the communication network, based on the determined IP protocol type, which are described above, may be stored in the memory 140 (see FIG. 2), and training using the neural network 1100 may be performed by the processor 130 (see FIG. 2). In this case, the processor 130 may include an Al processor.

Alternatively, the neural network 1100 that performs at least one of i) operation of identifying a requirement of a network operator providing a connection-target network service, ii) operation of obtaining network service information of a communication network by decoding SIB obtained from a neighboring base station, the network service information provided from the network operator, iii) operation of determining an IP protocol type to connect to the communication network, based on at least one of the requirement of the network operator, the network service information, and RAT information of a communication device, and iv) operation of transmitting a request signal for requesting a PDN access to the communication network, based on the determined IP protocol type, may be implemented in a separate device (not shown) or a processor (not shown), which is independent from the communication device 100.

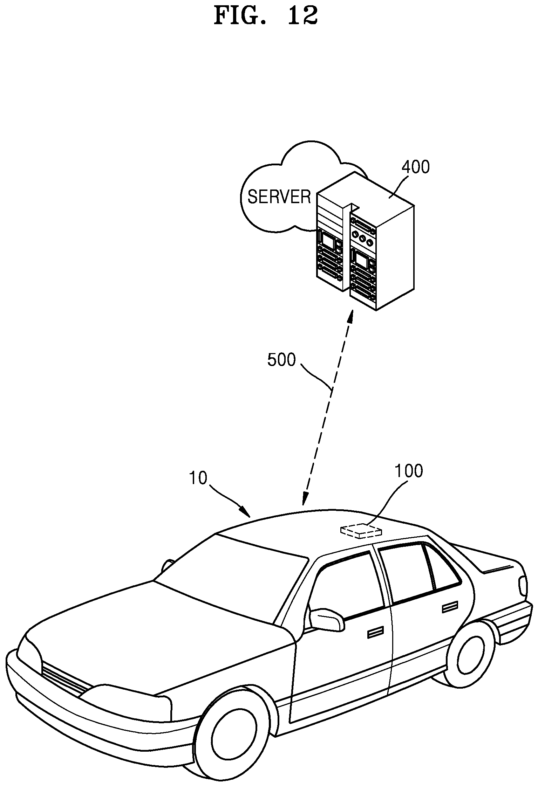

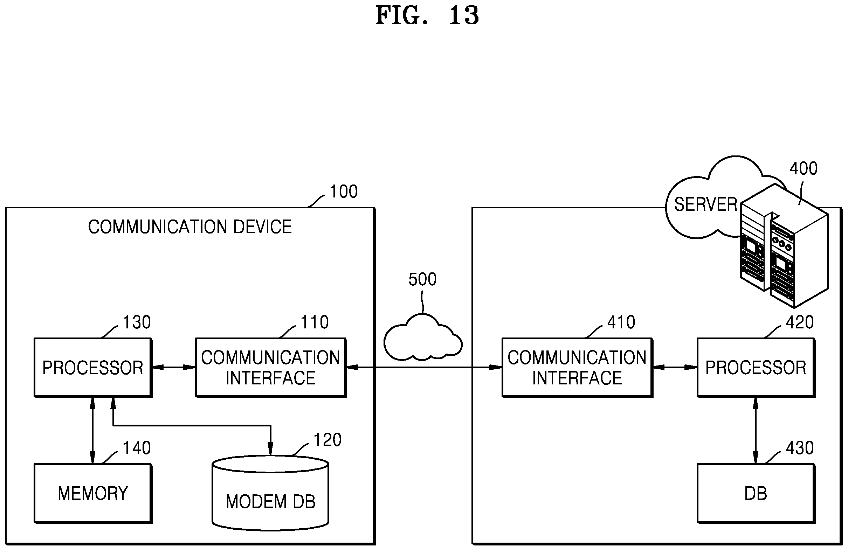

The computations via the neural network 1100 may be performed by the server 400 (see FIGS. 12 and 13) capable of communicating with the communication device 100 according to an embodiment via a wireless communication network. Communication between the communication device 100 and the server 400 will now be described with reference to FIGS. 12 and 13.

FIG. 12 is a diagram illustrating the communication device 100 interoperating with the server 400, according to an embodiment of the present disclosure.

The server 400 may process data by transmitting and receiving the data with the communication device 100 via a communication network 500.

Referring to FIG. 13 together, the server 400 may include a communication interface 410 configured to communicate with the communication device 100, a processor 420 configured to perform at least one instruction, and a database 430.

The server 400 may train an Al model, and may store the trained Al model. The server 400 may perform at least one of i) operation of identifying a requirement of a network operator providing a connection-target network service, ii) operation of obtaining network service information of a communication network by decoding SIB obtained from a neighboring base station, the network service information provided from the network operator, iii) operation of determining an IP protocol type to connect to the communication network, based on at least one of the requirement of the network operator, the network service information, and RAT information of a communication device, and iv) operation of transmitting a request signal for requesting a PDN access to the communication network, based on the determined IP protocol type.

In general, the communication device 100 may have a limit in a storage capacity of the memory 140 (see FIG. 2), a computation processing speed of the processor 130 (see FIG. 2), capability of collecting a training data set, etc., compared to the server 400. Therefore, the server 400 may perform an operation requesting storage of a large amount of data and large amount of computation, and then may transmit necessary data and/or an Al model to the communication device 100 via the communication network. Then, the communication device 100 may rapidly and easily perform a necessary operation by receiving and using the necessary data and/or the Al model via the server 400, without a large capacity memory and a processor with fast computation performance.

In a disclosed embodiment, the server 400 may include the neural network 1100 described with reference to FIG. 11.

FIG. 13 is a diagram for particularly describing FIG. 12.

Referring to FIG. 13, the server 400 may include the communication interface 410, the processor 420, and the database 430.

The communication interface 410 may communicate with an external device via a wireless communication network. Here, the external device (not shown) may include a server capable of performing at least one of computations requested by the communication device 100, or transmitting data requested by the communication device 100.

The communication interface 410 includes at least one hardware communication module such as a short-range communication module, a wired communication module, a mobile communication module, a broadcasting receiving module, etc. Here, at least one communication module indicates a tuner performing broadcasting reception, a hardware communication device capable of performing data transmission and reception via a network conforming to communication rules such as wireless local area network (WLAN)(Wi-Fi), WiBro, WiMAX, CDMA, WCDMA, Internet, 3G, 4G, 5G and/or a communication scheme using mmWave.

The mobile communication module included in the communication interface 410 may be configured as a hardware device configured to perform communication with other device (e.g., the communication device 100) in a long range via a communication network conforming to communication rules such as 3G, 4G (LTE), and/or 5G. Here, a communication module configured to perform communication with other device in a long range may be referred to as a 'long-range communication module'. According to an embodiment of the present disclosure, the communication interface 410 of the server 400 may transmit and receive data with the communication interface 110 of the communication device 100 by wire or wirelessly.

The processor 420 controls overall operations of the server 400. For example, the processor 420 may perform requested operations by executing at least one instruction of the server 400, and at least one of programs.

The database 430 may include a memory (not shown), and may store, in the memory (not shown), at least one of at least one instruction, a program, and data, which is necessary for the server 400 to perform a preset operation. Also, the database 430 may store a plurality of pieces of data necessary for the server 400 to perform a computation according to a neural network.

In a disclosed embodiment, the server 400 may store the neural network 1100 described with reference to FIG. 11. The neural network 1100 may be stored in at least one of the processor 420 and the database 430. The neural network 1100 included in the server 400 may be a neural network for which training has been completed.

Also, the server 400 may transmit the neural network 1100 (see FIG. 11) for which training has been completed to the communication interface 110 of the communication device 100 via the communication interface 410. The communication device 100 may obtain and store the neural network 1100 for which training has been completed, and may obtain intended output data via the neural network 1100.

An aspect of the present disclosure provides an operating method of a communication device mounted in a vehicle. According to an embodiment of the present disclosure, an operating method of a communication device mounted in a vehicle may include identifying a requirement of a network operator providing a connection-target network service. According to an embodiment of the present disclosure, the operating method may include obtaining network service information of a communication network by decoding a SIB obtained from a neighboring base station, the network service information being provided from the network operator. According to an embodiment of the present disclosure, the operating method may include determining an IP protocol type to connect to the communication network, based on at least one of the requirement of the network operator, the network service information, and RAT information of the communication device. According to an embodiment of the present disclosure, the operating method may include transmitting a request signal for requesting a PDN access to the communication network, based on the determined IP protocol type.

According to an embodiment of the present disclosure, the requirement of the network operator may be a policy about an IP protocol type preset according to the network service information provided by the network operator.

According to an embodiment of the present disclosure, the policy is preset to determine the IP protocol type as IPv6, in a case that a network service provided by the network operator supports at least one communication scheme of 5G NSA or 5G SA.

According to an embodiment of the present disclosure, the determining of the IP protocol type may include, in a case that the requirement of the network operator is identified, determining the IP protocol type, based on the identified requirement.

According to an embodiment of the present disclosure, the determining of the IP protocol type may include determining whether the communication network is capable of supporting 5G SA, based on the network service information, and in a case that it is determined that the communication network supports the 5G SA, determining the IP protocol type as IPv6.

According to an embodiment of the present disclosure, the determining of the IP protocol type may include determining whether the communication network is capable of supporting 5G SA or 5G NSA, based on the network service information, and in a case that it is determined that the communication network supports only the 5G NSA, determining the IP protocol type as IPv4v6 dual stack.

According to an embodiment of the present disclosure, the operating method may further include storing information about at least one of the requirement of the network operator, the network service information, and the determined IP protocol type, in a modem database in the communication device.

According to an embodiment of the present disclosure, the operating method may further include transmitting information about the requirement of the network operator and the network service information to a cloud server of a vehicle manufacturer, and requesting the cloud server to perform an update using the transmitted information.

According to an embodiment of the present disclosure, the operating method may further include receiving a requirement and network service information of the network operator which are updated, from the cloud server of the vehicle manufacturer, and determining an IP protocol type via which a PDN access is to be requested, based on the received requirement and the received network service information.

Another aspect of the present disclosure provides a communication device mounted in a vehicle. According to an embodiment of the present disclosure, a communication device mounted in a vehicle may include a communication interface, a modem database storing a PLMN of at least one network operator and information about a requirement of the at least one network operator, a memory storing a program including one or more instructions, and at least one processor configured to execute the one or more instructions of the program stored in the memory. The at least one processor may be configured to identify the requirement of the a network operator, based on IMSI information of a SIM card and the PLMN stored in the modem database. The at least one processor may be configured to obtain service information of a connectable communication network provided by the network operator, by decoding a SIB obtained from a neighboring base station via the communication interface. The at least one processor may be configured to determine an IP protocol type to connect to the communication network, based on at least one of the identified requirement of the network operator, the obtained service information of the communication network, and RAT information of the communication device. The at least one processor may be configured to control the communication interface to transmit a request signal for requesting a PDN access to the communication network, based on the determined IP protocol type.

According to an embodiment of the present disclosure, the at least one processor may be configured to identify a PMLN from IMSI information of the SIM card, and may obtain, from the modem database, information about a requirement of a network operator which corresponds to the identified PMLN.

According to an embodiment of the present disclosure, the requirement of the network operator may be a policy about an IP protocol type preset according to network service information provided by the network operator.

According to an embodiment of the present disclosure, the policy is preset to determine the IP protocol type as IPv6, in a case that a network service provided by the network operator supports at least one communication scheme of 5G NSA or 5G SA.

According to an embodiment of the present disclosure, the at least one processor may be configured to, in a case that the requirement the at least one network operator is identified, determine the IP protocol type, based on the identified requirement.

According to an embodiment of the present disclosure, the at least one processor may be configured to determine whether the communication network is capable of supporting 5G SA, based on the network service information, and in a case that it is determined that the communication network supports the 5G SA, determine the IP protocol type as IPv6.

According to an embodiment of the present disclosure, the at least one processor may be configured to determine whether the communication network is capable of supporting 5G SA or 5G NSA, based on the network service information, and in a case that it is determined that the communication network supports only the 5G NSA, determine the IP protocol type as IPv4v6 dual stack.

According to an embodiment of the present disclosure, the at least one processor may be storing information about at least one of the requirement of the at least one network operator, the network service information, and the determined IP protocol type, in the modem database.

According to an embodiment of the present disclosure, the at least one processor may be configured to control the communication interface to transmit information about the requirement of the at least one network operator and the network service information to a cloud server of a vehicle manufacturer, and request the cloud server to perform an update using the transmitted information.

According to an embodiment of the present disclosure, the at least one processor may be configured to receive, via the communication interface, a requirement and network service information of the at least one network operator which are updated, from the cloud server of the vehicle manufacturer, and determine an IP protocol type via which a PDN access is to be requested, based on the received requirement and the received network service information.

Another aspect of the present disclosure provides a computer program product including a computer-readable recording medium The computer-readable recording medium including instructions readable by a communication device mounted in a vehicle to perform operations of: identifying a requirement of a network operator providing a connection-target network service; obtaining network service information of a communication network by decoding a SIB obtained from a neighboring base station, the network service information being provided from the network operator; determining an IP protocol type to connect to the communication network, based on at least one of the requirement of the network operator, the network service information, and RAT information of the communication device; and transmitting a request signal for requesting a PDN access to the communication network, based on the determined IP protocol type.

A program executable by the communication device 100 described in the present specification may be implemented as a hardware element, a software element, and/or a combination of hardware elements and software elements. The program is executable by any system capable of executing computer-readable instructions.

The software may include a computer program, code, instructions, or a combination of one or more thereof, and may configure the processor to operate as desired or may independently or collectively instruct the processor.

The software may be implemented as a computer program that includes instructions stored in computer-readable storage media. The computer-readable storage media may include, for example, magnetic storage media (e.g., a read-only memory (ROM), a random-access memory (RAM), floppy disks, hard disks, etc.) and optical storage media (e.g., a compact disc ROM (CD-ROM), a digital versatile disc (DVD), etc.). The computer-readable recording medium may be distributed in computer systems connected via a network and may store and execute computer-readable code in a distributed manner. The medium is readable by a computer, stored in a memory, and executable by a processor.

The computer-readable storage medium may be provided in the form of a non-transitory storage medium. Here, the term 'non-transitory' simply means that the storage medium is a tangible device, and does not include a signal, but this term does not differentiate between where data is semi-permanently stored in the storage medium and where the data is temporarily stored in the storage medium. For example, the non-transitory storage medium may include a buffer in which data is temporarily stored.

In addition, a program according to embodiments disclosed in the present specification may be provided in a computer program product. The computer program product may be traded as commodities between sellers and buyers.

The computer program product may include a software program and a computer-readable recording medium storing the software program. For example, the computer program product may include a product (e.g., a downloadable application) in the form of a software program electronically distributed via a manufacturer of the electronic device or an electronic market (e.g., Samsung Galaxy Store^{™}, Google PlayStore^{™}). For electronic distribution, at least part of the software program may be stored in a storage medium or temporarily generated. In this case, the storage medium may be a storage medium of the cloud server 300 (see FIG. 9) of the manufacturer of the vehicle 10, a server of the manufacturer of the communication device 100, a server of the electronic market, or a relay server that temporarily stores the software program.

The computer program product may include a storage medium of the server 400 or a storage medium of another electronic device, in a system consisting of the communication device 100, the server 400 (see FIGS. 12 and 13), and the other electronic device. Alternatively, when there is a third device (e.g., a smart phone) communicatively connected to the electronic device 100, the computer program product may include a storage medium of the third device. Alternatively, the computer program product may include the software program itself, which is transmitted from the communication device 100 to the other electronic device or the third device or transmitted from the third device to the communication device 100.

In this case, one of the communication device 100, the other electronic device, and the third device may execute the computer program product to perform the method according to the embodiments disclosed herein. Alternatively, at least two of the communication device 100, the other electronic device, and the third device may execute the computer program product to execute the method according to the embodiments disclosed herein in a distributed manner.

For example, the communication device 100 may execute the computer program product stored in the memory 140 (see FIG. 2) to control the other electronic device communicatively connected to the communication device 100 to perform the method according to embodiments disclosed herein.

As another example, the third device may execute the computer program product to control an electronic device communicatively connected to the third device to perform the method according to an embodiment disclosed herein.

When the third device executes the computer program product, the third device may download the computer program product from the communication device 100, and may execute the downloaded computer program product. Alternatively, the third device may execute the computer program product provided in a pre-loaded state to perform the method according to the embodiments disclosed herein.

Although the embodiments have been described with the limited embodiments and the drawings, various modifications and changes may be made by those of skill in the art from the above description. For example, suitable results may be obtained even when the described techniques are performed in a different order, or when components in a described electronic device, architecture, device, or circuit are coupled or combined in a different manner, or replaced or supplemented by other components or their equivalents.

## Claims

1. An operating method of a communication device mounted in a vehicle, the operating method comprising:
identifying a requirement of a network operator providing a connection-target network service;
obtaining network service information of a communication network by decoding a system information block (SIB) obtained from a neighboring base station, the network service information being provided from the network operator;
determining an Internet Protocol (IP) protocol type to connect to the communication network, based on at least one of the requirement of the network operator, the network service information, and Radio Access Technology (RAT) information of the communication device; and
transmitting a request signal for requesting a public data network (PDN) access to the communication network, based on the determined IP protocol type.

2. The operating method of claim 1, wherein the requirement of the network operator is a policy about an IP protocol type preset according to the network service information provided by the network operator.

3. The operating method of claim 2, wherein the policy is preset to determine the IP protocol type as IPv6, in a case that a network service provided by the network operator supports at least one communication scheme of 5^{th}-generation Non-Stand Alone (5G NSA) or 5G Stand Alone (5G SA).

4. The operating method of claim 1, wherein the determining of the IP protocol type comprises, in a case that the requirement of the network operator is identified, determining the IP protocol type, based on the identified requirement.

5. The operating method of claim 1, further comprising:
storing information about at least one of the requirement of the network operator, the network service information, and the determined IP protocol type, in a modem database in the communication device.

6. The operating method of claim 1, further comprising:
transmitting information about the requirement of the network operator and the network service information to a cloud server of a vehicle manufacturer, and requesting the cloud server to perform an update using the transmitted information.

7. The operating method of claim 6, further comprising:
receiving a requirement and network service information of the network operator which are updated, from the cloud server of the vehicle manufacturer; and
determining an IP protocol type via which a public data network (PDN) access is to be requested, based on the received requirement and the received network service information.

8. A communication device mounted in a vehicle, the communication
device comprising:
a communication interface;
a modem database storing a public land mobile network (PLMN) of at least one network operator and information about a requirement of the at least one network operator;
a memory storing a program comprising one or more instructions; and
at least one processor configured to execute the one or more instructions of the program stored in the memory,
wherein the at least one processor is configured to
identify the requirement of a network operator, based on International Mobile Subscriber Identity (IMSI) information of a subscriber identification module (SIM) card and the PLMN stored in the modem database,
obtain service information of a connectable communication network provided by the network operator, by decoding a system information block (SIB) obtained from a neighboring base station via the communication interface,
determine an Internet Protocol (IP) protocol type to connect to the communication network, based on at least one of the identified requirement of the network operator, the obtained service information of the communication network, and Radio Access Technology (RAT) information of the communication device, and
control the communication interface to transmit a request signal for requesting a public data network (PDN) access to the communication network, based on the determined IP protocol type.

9. The communication device of claim 8, wherein the requirement of the network operator is a policy about an IP protocol type preset according to network service information provided by the network operator.

10. The communication device of claim 9, wherein the policy is preset to determine the IP protocol type as IPv6, in a case that a network service provided by the network operator supports at least one communication scheme of 5^{th}-generation Non-Stand Alone (5G NSA) or 5G Stand Alone (5G SA).

11. The communication device of claim 8, wherein the at least one processor is configured to, in a case that the requirement the network operator is identified, determine the IP protocol type, based on the identified requirement.

12. The communication device of claim 8, wherein the at least one processor is configured to store information about at least one of the requirement of the network operator, the network service information, and the determined IP protocol type, in the modem database.

13. The communication device of claim 8, wherein the at least one processor is configured to
control the communication interface to transmit information about the requirement of the network operator and the network service information to a cloud server of a vehicle manufacturer, and
request the cloud server to perform an update using the transmitted information.

14. The communication device of claim 13, wherein the at least one processor is configured to
receive, via the communication interface, a requirement and network service information of the network operator which are updated, from the cloud server of the vehicle manufacturer, and
determine an IP protocol type via which a public data network (PDN) access is to be requested, based on the received requirement and the received network service information.

15. A computer program product comprising a computer-readable recording medium, the computer-readable recording medium comprising instructions readable by a communication device mounted in a vehicle to perform operations of:
identifying a requirement of a network operator providing a connection-target network service;
obtaining network service information of a communication network by decoding a system information block (SIB) obtained from a neighboring base station, the network service information being provided from the network operator;
determining an Internet Protocol (IP) protocol type to connect to the communication network, based on at least one of the requirement of the network operator, the network service information, and Radio Access Technology (RAT) information of the communication device; and
transmitting a request signal for requesting a public data network (PDN) access to the communication network, based on the determined IP protocol type.
